# EUROPÄISCHE PATENTSCHRIFT

(11) **EP 2 158 425 B1**
(45) Veröffentlichungstag und Bekanntmachung des Hinweises auf die Patenterteilung: **05.01.2011**
(21) Anmeldenummer: 07786753.9
(22) Anmeldetag: 18.06.2007
(51) Int. Cl.: F16L 19/08, F16L 19/06

(54) **VERBINDUNGSANORDNUNG FÜR EINE ROHRVERSCHRAUBUNG**
CONNECTING ARRANGEMENT FOR A PIPE UNION
SYSTÈME DE RACCORDEMENT POUR UN RACCORD VISSÉ

(43) Veröffentlichungstag der Anmeldung: 03.03.2010
(73) Patentinhaber: Weidmann LTD., Biberweg 28a 53842 Troisdorf (DE)
(72) Erfinder: FELDER, Norbert, 53773 Hennef (DE)
(74) Vertreter: Dörner, Kötter & Kollegen
(86) Internationale Anmeldenummer: PCT/EP2007/056016
(87) Internationale Veröffentlichungsnummer: WO 2008/154950

(56) Entgegenhaltungen:
- EP-A- 0 863 354
- EP-A- 1 236 947
- DE-A1- 19 637 129
- DE-B3-102006 012 493
- DE-C1- 4 038 539
- US-A- 2 701 149
- US-A- 3 695 640
- US-A- 4 799 717
- US-A- 5 961 160

## Beschreibung

Die Erfindung betrifft eine Verbindungsanordnung nach dem Oberbegriff des Patentanspruchs 1, siehe DE 40 38 539 C1.

Mit derartigen Verbindungsanordnungen sollen Rohrverschraubungen möglich werden. Dabei soll eine insbesondere metallische Rohrleitung an einen eine Aufnahmeöffnung für die Rohrleitung aufweisenden Anschlussstutzen angeschlossen werden. Eine mit dem Anschlussstutzen verschraubbare Überwurfmutter lässt sich beim Anschließen drehen und übt somit eine Axialbewegung auf einen Schneidring aus, der sich zwischen der Überwurfmutter und dem Anschlussstutzen befindet. Durch das Anordnen verschiedener kegelförmiger Bohrungen und darin sitzender Gegenstücke wird die axiale Bewegung auf einen Schneidring mit einer Schneide so übertragen, dass beim Anziehen der Überwurfsmutter bereichsweise eine Verformung radial nach innen stattfindet. Eine Schneidkante schneidet dann formschlüssig unter Kerbwirkung in das Material der Rohrleitung ein.

Derartige Konzeptionen sind beispielsweise aus der DE 196 37 129 C2, der EP 0 863 354 B1 oder der DE 40 38 539 C1 bekannt. Diese und weitere Konzeptionen werden auch in der Praxis vielfach eingesetzt.

Problematisch ist, dass durch die Vielzahl der relativ zueinander beweglichen kleinen Elemente, die alle ringförmig das anzuschließende Rohr umgeben, relativ viel Kraft aufgewendet werden muss, um die verschiedenen Umlenkbewegungen sicherzustellen.

Aufgabe der Erfindung ist es demgegenüber, eine Verbindungsanordnung für Rohrverschraubungen vorzuschlagen, die ohne einen Verlust an Zuverlässigkeit und Funktionalität für den Benutzer mit weniger Kraftaufwand verschraubbar ist.

Diese Aufgabe wird bei einer gattungsgemäßen Verbindungsanordnung durch die Merkmale des kennzeichnenden Teils des Patentanspruchs 1 gelöst.

Der Schneidring verliert durch die Schlitzung nichts an seiner Funktionalität. Er besitzt unverändert eine umlaufende Schneide, die sich in die Außenfläche des Rohres unter Kerbwirkung einschneiden kann. Daran ändert die Schlitzung nichts. Der Schneidring wird jedoch wesentlich leichter in radialer Richtung verformbar. Er setzt entsprechenden Kräften und Bewegungen praktisch kaum noch Widerstand entgegen. Das bedeutet, dass sich für den Anwender bei der Montage der Verbindungsanordnung, also beim Aufschrauben der Überwurfmutter auf das Gewinde des Anschlusskörpers, deutlich reduzierte Kräfte ergeben.

Um diese Wirkung des geschlitzten Schneidringes besonders gut umzusetzen, haben sich spezielle Werte für die verschiedenen Winkel als besonders praktikabel herausgestellt.

So wird es bevorzugt, wenn der Konuswinkel des zweiten Konus des Schneidrings und der Kegelwinkel der kegeligen Bohrung des Zwischenrings jeweils mehr als 20°, insbesondere etwa 30° (5°) betragen.

Insbesondere wird so auch ein noch sehr viel präziseres radiales Einschneiden möglich. Das Umsetzen der axialen Kräfte beim Aufschrauben der Überwurfmutter in radiale Kräfte zum Einschneiden der Schneiden des Schneidringes in die Außenfläche des Rohres geschieht wesentlich präziser.

Herkömmlich hat man den Konuswinkel des zweiten Konus des Schneidrings üblicherweise bei etwa 12° angesetzt. Durch die bevorzugten Merkmale entsteht jedoch ein Konuswinkel bei dem neuen Schneidring in einem Bereich um 30°. Das bedeutet, dass bei gleichen axialen Wegen während des Zusammenfügens der erfindungsgemäßen Verbindungsanordnung der Schneidring jetzt deutlich tiefer einschneidet und somit eine wesentlich sicherere Verbindung entsteht. Nach Überlegungen dürfte die Verbindung jetzt um einen Faktor von etwa 2,8 besser sein als die aus dem Stand der Technik.

Bei einer näheren Betrachtung mit Zahlenbeispielen entspricht beispielsweise 1 mm axialen Weges bei einem herkömmlichen Konuswinkel von 12° einer Strecke von 0,21 mm radialem Weg, während bei einer erfindungsgemäßen Ausgestaltung des Konuswinkels von 30° aus dem 1 mm axialen Weg ein radialer Weg von 0,57 mm wird.

Man kann sich dies so vorstellen, dass die neue erfindungsgemäße Konzeption dazu führt, dass der Schneidring durch den steileren Winkel deutlich mehr in radialer Richtung verformt wird als bei den herkömmlichen Konstruktionen mit ihren flacheren Konuswinkeln an den Schneidringen. Somit schneidet der Schneidring jetzt erfindungsgemäß besser in den Rohrwerkstoff ein.

Dadurch, dass jetzt ein wesentlich genaueres und sichereres radiales Einschneiden des Schneidringes erfolgt, werden Toleranzen des Schneidringes auch besser ausgeglichen. Die Durchmessertoleranz des Schneidringes beispielsweise wird wesentlich fehlertoleranter, so dass die Gesamtwirkung noch weit zuverlässiger wird.

Dadurch, dass der Schneidring radial auch deutlich besser einschneidet, wird nicht nur die Durchmessertoleranz, sondern auch die Schneidenverrundung deutlich fehlertoleranter und sicherer.

Weiterhin weist der Zwischenring eine Anschlagbegrenzungsfläche auf, der Schneidring weist auf der dem Zwischenring benachbarten Seite eine der Anschlagbegrenzungsfläche entsprechende Abstützfläche auf, und die Anschlagsbegrenzungsfläche und die kegelige Bohrung des Zwischenrings schließen miteinander einen Winkel ein.

Die spezielle Anordnung des Zwischenringes ermöglicht es, die Funktionen des Einschneidens und des Haltens von einer ebenfalls bevorzugt gewünschten Funktion des Dichtens zu trennen.

Dies geschieht bevorzugt dadurch, dass der Zwischenring ein Weichdichtungselement aufweist, das zwischen der Wandung des Rohres, dem Zwischenring und der kegeligen Bohrung des Anschlusskörpers um das Rohr umlaufend angeordnet ist.

Dies gilt ganz besonders bevorzugt dann, wenn das Weichdichtungselement durch den Zwischenring, der an dem Rohr außen anliegt, von dem Schneidring getrennt ist.

Besonders bevorzugt ist es außerdem, wenn die Abmessungen des Schneidringes und des Zwischenrings so groß bemessen sind, der Schneidring nach dem Montageende mit der Abstützfläche auf der Anschlagsbegrenzungsfläche des Zwischenrings (und mit der die Schneiden tragenden Fläche an der Außenseite des Rohres aufliegt.

Das ermöglicht nämlich eine eindeutige Signalisierung des Montageendes, wenn nämlich der Schneidring auf dem Zwischenring aufliegt. Auf diese Weise kann eine Übermontage des Schneidringes ausgeschlossen werden.

Insgesamt wird der axiale Weg der Überwurfmutter und des Schneidringes nun durch die Erfindung optimal in einen radialen Weg umgesetzt. Das Einschneiden des Schneidringes wird deutlich verbessert. Dies wird durch optimierte Winkel unterstützt.

Bevorzugt ist es ferner, wenn eine Schneidenverrundung vorgesehen wird. Mit einer Schneidenverrundung wird die Gefahr eines Herausreißens des Rohres geringer, also die Gefahr einer unbeabsichtigten Lösung der Verbindungsanordnung durch die Ausübung von großen Kräften. Zu bedenken ist ja, dass bei derartigen Vorkommnissen die gesamten Kräfte von der Schneide aufgenommen werden müssen.

Im Folgenden wird anhand der Zeichnung ein Ausführungsbeispiel der Erfindung näher erläutert. Es zeigen:
- Figur 1: einen Schnitt durch eine erfindungsgemäße Ausführungsform einer Verbindungsanordnung;
- Figur 2: eine vergrößerte Darstellung eines Details aus der Figur 1;
- Figur 3: eine Draufsicht auf einen Schneidring gemäß der Erfindung; und
- Figur 4: eine perspektivische Darstellung des Schneidringes aus Figur 3.

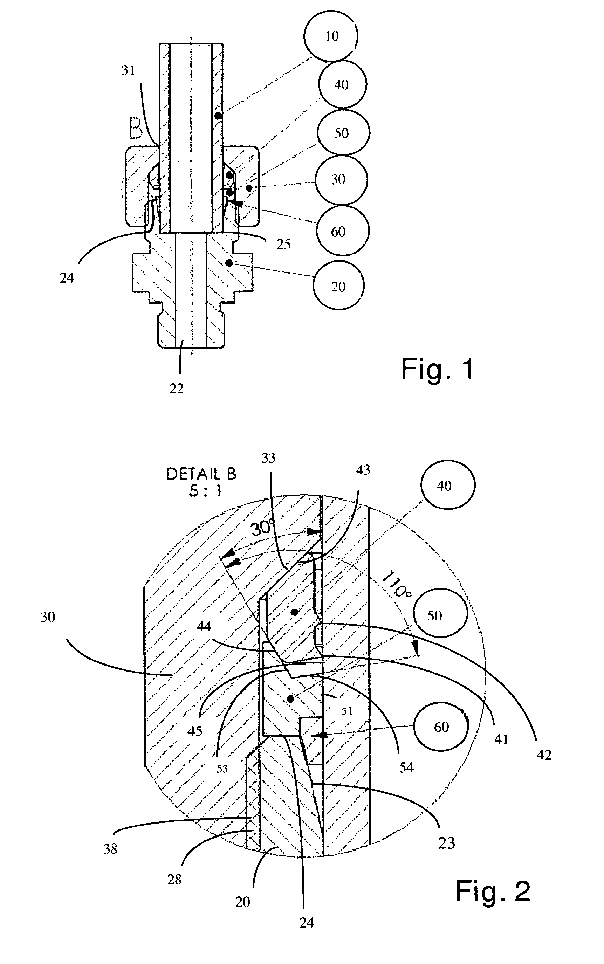

Eine Rohrverschraubung eines Rohres 10 mit einem Anschlusskörper 20 wird in Figur 1 näher erläutert. Das Rohr 10 ist zylindrisch; in der Figur 1 ist beispielhaft ein unteres Ende des Rohres 10 dargestellt, das wesentlich länger sein kann und auch Teil einer Rohrleitungsanordnung sein könnte.

Dieses Rohr 10 wird in einen Anschlusskörper 20 eingesteckt. Der Anschlusskörper 20 besitzt zu diesem Zweck eine erste zylindrische Bohrung 21, die exakt so bemessen ist, dass das Rohr 10 dort hineingesteckt werden kann. Eine zweite Bohrung 22 ist mit einem kleineren Durchmesser ausgestattet. Diese zweite Bohrung 22 setzt die erste Bohrung in Richtung des inneren des Anschlusskörpers 20 fort. Im inneren des Rohres 10 befindliches Medium kann so in die zweite Bohrung 22 gelangen, um dort weiter gefördert zu werden.

Das Rohr 10 stützt sich dabei auf einer Stirnfläche 25 ab, die die erste Bohrung 21 und die zweite Bohrung 22 voneinander trennt.

Eine weitere Stirnfläche 24 ist als äußere Fläche des Anschlusskörpers 20 vorgesehen; dabei geht die erste, äußere zylindrische Bohrung 21 in eine kegelige Bohrung 23 über, die sich in Richtung der Stirnfläche 24 öffnet.

Außen besitzt der Anschlusskörper 20 noch ein Gewinde 28, das zum Verschrauben mit einem Gegengewinde 38 ausgerüstet ist, das noch im Folgenden beschrieben wird.

Auf das Gewinde 28 des Anschlusskörpers 20 kann nämlich eine Überwurfmutter 30 mit diesem Gegengewinde 38 aufgeschraubt werden. Die Überwurfmutter 30 besitzt eine Bohrung 31, durch die das Rohr 10 geführt werden kann. Zwischen der Bohrung 31 und dem Gewinde 38 ist noch ein Abschnitt vorgesehen, bei dem sich die Bohrung durch die Überwurfmutter 30 als kegelige Bohrung 33 in Richtung auf den Anschlusskörper 20 zu erweitert.

Zwischen dem Anschlusskörper 20 und der Überwurfmutter 30 befindet sich ein Schneidring 40. Dieser Schneidring 40 besitzt in der dargestellten Ausführungsform zwei umlaufende Schneiden 41 und 42, die jeweils in Richtung der Außenfläche des Rohres 10 gerichtet sind. Der Schneidring 40 umgibt das Rohr 10, das durch eine Bohrung 46 des Schneidringes ragt.

Der Schneidring 40 besitzt außerdem einen ersten Konus 43, der gegen die Überwurfmutter 30 gerichtet ist und in der kegeligen Bohrung 33 der Überwurfmutter 30 während der Montage sitzt.

Der Schneidring 40 besitzt außerdem einen zweiten Konus 44, der sich in der zum ersten Konus 43 entgegengesetzten Richtung verjüngt.

Zwischen dem Schneidring 40 und dem Anschlusskörper 20 ist ein Zwischenring 50 angeordnet. Auch dieser Zwischenring 50 besitzt eine Bohrung 51 für das Rohr 10 und umgibt dieses Rohr 10. Der Zwischenring 50 kann auch als Adapterelement oder als Haltering bezeichnet werden.

Dieser Zwischenring 50 besitzt eine umlaufende Stützfläche 52, mit der er auf der Stirnfläche 24 des Anschlusskörpers 20 aufliegt.

Außerdem besitzt er auf der von dieser Stützfläche 52 abgewandten Seite eine kegelförmige Bohrung 53. In dieser kegelförmigen Bohrung 53 sitzt der zweite Konus 44 des Schneidringes 40.

Diese kegelige Bohrung 53 grenzt an und geht über in eine Anschlagsbegrenzungsfläche 54 des Zwischenrings 50 benachbart zur Bohrung 51 des Zwischenrings 50.

Gegenüber dieser Anschlagsbegrenzungsfläche 54 liegt eine Abstützfläche 45 des Schneidringes 40, die zunächst noch einen Abstand von dieser Anschlagsbegrenzungsfläche aufweist.

Der Zwischenring 50 trägt außerdem ein Weichdichtungselement 60. Dieses Weichdichtungselement 60 befindet sich zwischen der äußeren Wandung des Rohres 10, der kegeligen Bohrung 23 des Anschlusskörpers 20 und einer entsprechenden Trageinrichtung des Zwischenringes 50. Da der Zwischenring 50 ebenfalls an die äußere Wandung des Rohres 10 angrenzt, ist das um das Rohr 10 ebenfalls umlaufende Weichdichtungselement 60 von dem Schneidring 40 dauerhaft mechanisch getrennt.

Die vergrößerte Darstellung des Details B in der Figur 2 zeigt insbesondere, welche Winkel die kegeligen Bohrungen aufweisen und wie die ungefähren Größenverhältnisse der einzelnen Elemente zueinander sind.

Gut zu erkennen ist wiederum die Wandung des Rohres 10, die aufeinanderfolgenden Bereiche des Anschlusskörpers 20, des Zwischenrings 50 mit dem Weichdichtungselement 60, des Schneidringes 40 und darüber der Überwurfmutter 30.

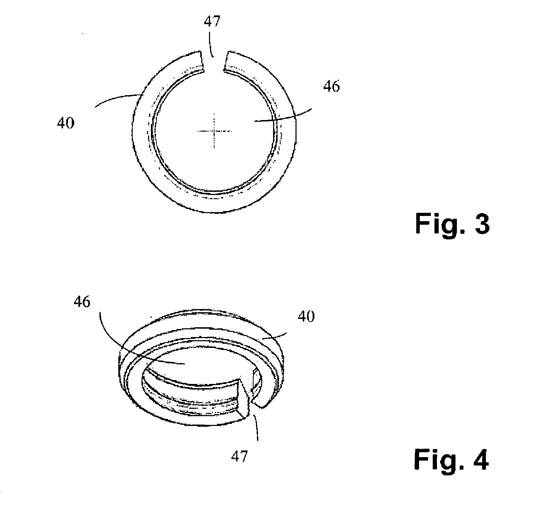

Der Schneidring 40 ist insbesondere in der Figur 3 in Draufsicht gut zu erkennen. Man sieht hier, dass er kein durchgehend geschlossener, die Bohrung 46 umgebender Ring ist, sondern dass er eine Schlitzung 47 aufweist. Dadurch wird er radial wesentlich leichter verformbar, auch wenn er um das Rohr 10 herumgelegt ist.

Perspektivisch kann man in der Figur 4 erkennen, wie die Schlitzung 47 aufgebaut ist und wie sie sich relativ zu den konusförmigen Bereichen verhält.

Bei einer Montage eines Rohres 10 an dem Anschlusskörper 20 werden die Überwurfmutter 30 mit dem darin befindlichen Schneidring 40 und Zwischenring 50 von unten auf das Rohr geschoben, dieses dann in den Anschlusskörper 20 eingesetzt und danach dann die Überwurfmutter 30 verschraubt.

Die darin befindlichen Ringe nehmen von selbst ihren Platz ein, da die kegeligen Bohrungen 23, 33 und 53 genau zu den konusförmigen Elementen 43 und 44 passen.

Durch das Verschrauben der Überwurfmutter 30 wird auch der zunächst noch kleine Spalt zwischen der Abstützfläche 45 am Schneidring 40 und der Anschlagsbegrenzungsfläche 54 am Zwischenring 50 geschlossen, gleichzeitig dadurch jedoch eine Übermontage des Schneidringes 40 verhindert.

### Bezugszeichenliste

- 10: Rohr (zylindrisch)

- 20: Anschlusskörper
- 21: Bohrung (erste zylindrische Bohrung für das Rohr 10)
- 22: Bohrung (zweite mit kleinerem Durchmesser)
- 23: kegelige Bohrung
- 24: Stirnfläche, gegen den Zwischenring
- 25: Stirnfläche, gegen das Rohr 10
- 28: Gewinde zum Verschrauben mit Überwurfmutter 30

- 30: Überwurfmutter
- 31: Bohrung für das Rohr 10
- 33: kegelige Bohrung
- 38: Gewinde für Verschraubung mit Anschlusskörper 20

- 40: Schneidring
- 41: erste Schneide (umlaufend)
- 42: zweite Schneide (umlaufend)
- 43: erster Konus gegen Überwurfmutter 30
- 44: zweiter Konus gegen Zwischenring 50
- 45: Abstützfläche gegen Zwischenring 50
- 46: Bohrung für Rohr 10
- 47: Schlitzung

- 50: Zwischenring
- 51: Bohrung für Rohr 10
- 52: Stützfläche gegen Anschlusskörper 20
- 53: Konus für Schneidring 40
- 54: Anschlagsbegrenzungsfläche für Schneidring 40

- 60: Weichdichtungselement

## Patentansprüche

1. Verbindungsanordnung zum Anschluss eines zylindrischen Rohres (10) oder Rohrabschnittes an einen Anschlusskörper (20), wobei der Anschlusskörper (20) eine von einer Stirnfläche (24) ausgehende erste kegelige Bohrung (23), eine an die kegelige Bohrung (23) anschließende erste zylindrische Bohrung (21) zur Aufnahme des Rohres (10) und eine an die erste zylindrische Bohrung (21) anschließende und im Durchmesser reduzierte zweite zylindrische Bohrung (22) aufweist, mit einer Überwurfmutter (30), die eine Bohrung (31) für das Rohr (10) oder den Rohrabschnitt aufweist, mit einem Gewinde (38), mit dem die Überwurfmutter (30) auf ein Gegengewinde (28) des Anschlusskörpers (20) aufschraubbar ist, und mit einer kegeligen Bohrung (33), die sich zur kegeligen Bohrung (23) des Anschlusskörpers (20) entgegengesetzt verjüngt, mit einem Schneidring (40), der einen ersten Konus (43) aufweist, welcher in der kegeligen Bohrung (33) der Überwurfmutter (30) sitzt, welcher Schneidring (40) eine Bohrung (46) zur Durchführung des Rohres (10) oder Rohrabschnittes und wenigstens eine radial umlaufende Schneide (41, 42) aufweist, die dem Rohr (10) oder Rohrabschnitt zugewandt ist, und mit einem Zwischenring (50), welcher eine Bohrung (51) für das Rohr (10) oder den Rohrabschnitt aufweist, welcher zwischen dem Schneidring (40) und dem Anschlusskörper (20) angeordnet ist und welcher Zwischenring (50) eine kegelige Bohrung (53) aufweist, gegen welche ein zweiter Konus (44) des Schneidrings (40) drückt, wobei der Zwischenring (50) eine Anschlagbegrenzungsfläche (54) aufweist und der Schneidring (40) auf der dem Zwischenring (50) benachbarten Seite eine der Anschlagbegrenzungsfläche entsprechende Abstützfläche (45) aufweist, **dadurch gekennzeichnet, dass** der Schneidring (40) parallel zur Achse des Rohres (10) geschlitzt (47) ist, und dass die Anschlagsbegrenzungsfläche (54) und die kegelige Bohrung (53) des Zwischenrings (50) miteinander einen Winkel von 110° ± 5° einschließen.

2. Verbindungsanordnung nach Anspruch 1, **dadurch gekennzeichnet, dass** der Konuswinkel des zweiten Konus (44) des Schneidrings (40) und der Kegelwinkel der kegeligen Bohrung (53) des Zwischenrings (50) jeweils mehr als 20°, insbesondere etwa 30° ± 5° betragen.

3. Verbindungsanordnung nach einem der vorstehenden Ansprüche, **dadurch gekennzeichnet, dass** der Zwischenring (50) ein Weichdichtungselement (60) aufweist, das zwischen der Wandung des Rohres (10), dem Zwischenring (50) und der kegeligen Bohrung (23) des Anschlusskörpers (20) um das Rohr (10) umlaufend angeordnet ist.

4. Verbindungsanordnung nach Anspruch 3, **dadurch gekennzeichnet, dass** das Weichdichtungselement (60) durch den Zwischenring (50), der an dem Rohr (10) außen anliegt, von dem Schneidring (40) getrennt ist.

5. Verbindungsanordnung nach einem der vorstehenden Ansprüche, **dadurch gekennzeichnet, dass** die Abmessungen des Schneidrings (40) und des Zwischenrings (50) so groß bemessen sind, dass der Schneidring (40) nach dem Montageende mit der Abstützfläche (45) auf der Anschlagsbegrenzungsfläche (54) des Zwischenrings (50) und mit der die Schneiden (41, 42) tragenden Fläche an der Außenseite des Rohres (10) aufliegt.

6. Verbindungsanordnung nach einem der vorstehenden Ansprüche, **dadurch gekennzeichnet, dass** der Schneidring (40) mit einer Schneidenverrundung ausgestattet ist.

## Claims

1. Connecting arrangement for connecting a cylindrical pipe (10) or pipe section to a connecting body (20) where the connecting body (20) has a first tapered bore (23) issuing from a front surface (24), a first cylindrical bore (21) connected to the tapered bore (23) to receive the pipe (10) and a second cylindrical bore (22) with a reduced diameter connected to the first cylindrical bore (21), with a union nut (30) which has a bore (31) for the pipe (10) or pipe section, with a thread (38) by means of which the union nut (30) can be screwed onto the counter thread (28) of the connecting body (20), and with a tapered bore (33) which tapers in the opposite direction to the tapered bore (23) of the connecting body (20), with a cutting ring (40) which has a first taper (43) which is seated in the tapered bore (33) of the union nut (30), which cutting ring (40) has a bore (46) for the pipe (10) or pipe section to pass through, and at least one circumferential radial cutting edge (41, 42) facing the pipe (10) or pipe section, and with an intermediate ring (50) which has a bore (51) for the pipe (10) or pipe section, which is arranged between the cutting ring (40) and the connecting body (20), and which intermediate ring (50) has a tapered bore (53) against which a second taper (44) of the cutting ring (40) presses, **characterised in that** the cutting ring (40) has a slot (47) parallel to the axis of the pipe (10), where the intermediate ring (50) has a stop-limit surface (54) and the cutting ring (40) has a supporting surface (45) corresponding to the stop-limit surface on the side adjacent to the intermediate ring (50), and that the stop-limit surface (54) and the tapered bore (53) of the intermediate ring (50) together enclose an angle of 110° ± 5°.

2. Connecting arrangement in accordance with claim 1 **characterised in that** the taper angle of the second taper (44) of the cutting ring (40) and the taper angle of the tapered bore (53) of the intermediate ring (50) each amounts to more than 20°, but preferably approximately 30° ± 5°.

3. Connecting arrangement in accordance with one of the above claims, **characterised in that** the intermediate ring (50) has a soft sealing element (60) which is arranged around the circumference of the pipe between the wall of the pipe (10), the intermediate ring (50) and the tapered bore (23) of the connecting body (20).

4. Connecting arrangement in accordance with claim 3 **characterised in that** the soft sealing element (60) is separated from the cutting ring (40) by the intermediate ring (50) which lies against the outside of the pipe (10).

5. Connecting arrangement in accordance with one of the above claims, **characterised in that** the dimensions of the cutting ring (40) and the intermediate ring (50) are of a sufficient size that, when assembled, the supporting surface (45) of the cutting ring (40) lies against the stop-limit surface (54) of the intermediate ring (50) and the surface bearing the cutting edge (41, 42) lies against the outside of the pipe (10).

6. Connecting arrangement in accordance with one of the above claims, **characterised in that** the cutting ring (40) is fitted with a chamfer of the cutting edge.

## Revendications

1. Configuration de jonction pour raccorder un tube cylindrique (10) ou un segment tubulaire à un corps de raccordement (20), sachant que le corps de raccordement (20) présente un premier alésage conique (23) partant d'une surface frontale (24), un premier alésage cylindrique (21) jouxtant l'alésage conique (23) et destiné à recevoir le tube (10), et un deuxième alésage cylindrique (22) de diamètre inférieur jouxtant le premier alésage cylindrique (21), avec un écrou à collet (30) présentant un alésage (31) pour le tube (10) ou le segment tubulaire, avec un taraudage (38) permettant de visser l'écrou à collet (30) sur un filetage antagoniste (28) du corps de raccordement (20), et avec un alésage conique (33) qui va en s'amincissant dans le sens opposé à l'alésage conique (23) du corps de raccordement, avec une bague auto-fileteuse (40) présentant un premier cône (43) en assise dans l'alésage conique (33) de l'écrou à collet (30), ladite bague auto-fileteuse (40) présentant un alésage (46) pour faire passer le tube (10) ou le segment tubulaire, et au moins un tranchant (41, 42) périphérique radial regardant vers le tube (10) ou le segment tubulaire, et avec une bague intermédiaire (50) présentant un alésage (51) pour le tube (10) ou le segment tubulaire, bague agencée entre la bague auto-fileteuse (40) et le corps de raccordement (20), et ladite bague intermédiaire (50) présentant un alésage conique (53) contre lequel pousse un deuxième cône (44) de la bague auto-fileteuse (40), sachant que la bague intermédiaire (50) présente une surface butée limitatrice (54) et que la bague auto-fileteuse (40) présente, sur le côté voisin de la bague intermédiaire (50), une surface d'appui (45) correspondant à la surface butée limitatrice, **caractérisée en ce que** la bague de coupe (40) est fendue (47) parallèlement à l'axe du tube (10), et que la surface butée limitatrice (54) et l'alésage conique (53) de la bague intermédiaire (50) forment ensemble un angle de 110° ± 5°.

2. Configuration de jonction selon la revendication 1, **caractérisée en ce que** l'angle du deuxième cône (44) de la bague auto-fileteuse (40) et l'angle conique de l'alésage conique (53) de la bague intermédiaire (50) font chacun plus de 20° notamment environ 30° ± 5°.

3. Configuration de jonction selon l'une des revendications précédentes, **caractérisée en ce que** la bague intermédiaire (50) présente un élément à joint mou (60) qui est agencé périphériquement autour du tube (10) entre la paroi du tube (10), la bague intermédiaire (60) et l'alésage conique (23) du corps de raccordement (20).

4. Configuration de jonction selon la revendication 3, **caractérisée en ce que** l'élément à joint mou (60) est séparé de la bague auto-fileteuse (40) par la bague intermédiaire (50) qui applique à l'extérieur contre le tube (10).

5. Configuration de jonction selon l'une des revendications précédentes, **caractérisée en ce que** la bague auto-fileteuse (40) et la bague intermédiaire (50) ont été dimensionnées de telle manière que la bague auto-fileteuse (40), après la fin du montage, applique par la surface d'appui (45) sur la surface butée limitatrice (54) de la bague intermédiaire (50) et contre la surface extérieure du tube (10) par la surface supportant les tranchants (41, 42).

6. Configuration de jonction selon l'une des revendications précédentes, **caractérisée en ce que** les tranchants de la bague de coupe (40) sont dotés d'un arrondi.
